# EUROPEAN PATENT SPECIFICATION

(11) **EP 0 503 823 B1**
(45) Date of publication and mention of the grant of the patent: **02.08.1995**
(21) Application number: 92301824.6
(22) Date of filing: 04.03.1992
(51) Int. Cl.: F16C 1/02

(54) **Flexible shafts**
Biegsame Wellen
Axe flexible

(30) Priority: 15.03.1991 JP 75732/91
(43) Date of publication of application: 16.09.1992
(73) Proprietor: MIYAKE, Yoshinori, Chiba-ken 279 (JP); MIYAKE, Noriko, Chiba-ken 279 (JP)
(72) Inventor: Miyake, Yoshinori, Urayasu-shi, Chiba-ken 279 (JP)
(74) Representative: Dean, John Paul

(56) References cited:
- DE-C- 592 246
- GB-A- 13 546
- GB-A- 14 241
- US-A- 715 356
- US-A- 746 451
- US-A- 2 714 008
- US-A- 4 031 713
- US-A- 4 489 937
- US-A- 4 856 776

## Description

The present invention relates to a connection mechanism featuring high flexibility for shafts, which allows working force to be effectively transmitted or connected without the need for machining of shafts to be connected.

Various technologies have been used to connect shafts for the transmission of turning or driving force. A representative method employs thread or keyways, which are machined on both ends of shafts to be connected and are securely engaged with coupling members to allow the shafts to be connected.

Coiled materials are used as coupling members, and universal joints may also be employed. In this case, screws are used to connect coupling with shafts, or as mentioned above, the shaft ends are machined for connection.

Since conventional connection mechanisms require the machining or forming of thread or keyways on the ends of shafts to be connected or require some machining for tightening with screws, considerable machining man hours are required. In the case of shafts of comparatively small diameters, machining is difficult, and there is the added disadvantage that the coupling portion diameter will become considerably enlarged as well as the wall thickness.

In the case of eccentric shafts, universal joints are used, but their composition is complicated and their connection mechanism features connection portions which are quite large.

Whichever method is chosen, material and machining costs are high and make connection mechanism expensive.

In special cases, coil springs or rubber cylinders are used between shafts. However, their tensile force, one of the most important factors for shaft connection, is insufficient due to material restrictions. Consequently, they are not widely used in general.

In addition, in any connection mechanism, the optimum coupling should be prepared for each respective shaft, making the preparation and control of such couplings quite complicated. Also, when connecting shafts, their individual shapes should be taken into account, and manual connection is often required.

According to the invention there is provided a flexible connection for interconnecting shafts according to claim 1 and an arrangement comprising such a connection according to claim 8.

In the present invention, a new shaft connection mechanism devised to solve the above-mentioned conventional problems is presented which features helical shape-memorizing materials fitted onto the ends of shafts to be connected.

Helical shape-memorizing materials are deformed in advance to reduce or increase their diameters and shrink or expand onto shaft ends according to temperature change, in order to fit properly onto said shafts to connect them effectively. They can be properly adjusted to compensate for any slight axial deviation or curvature between shafts to be connected. Axial working force can be transmitted as their diameters decrease or increase according to temperature change, but said transmission can be greatly improved by slightly bending the shafts or by slightly machining their inner or outer surfaces.

These helical shape-memorizing materials can be properly adjusted against axial deviation or curvature between shafts or diameter differences, to form a small connector which adheres to the shafts. Manhours required for the connection of small shafts can be greatly reduced, leading to cost reduction, and small connectors can be obtained.

When a large working force is required to be transmitted, helical shape-memorizing materials of proper length (number of turns) are selected (or multi-layered helical materials may be used) for free transmission.

The invention provides considerable flexibility of application and design of the connection mechanism as opposed to the universal joint. When fitted onto a shaft, the connection mechanism becomes a compact shock absorber.

When turning forces in both forward and reverse directions are required to be transmitted between shafts, helical shape-memorizing materials wound in the forward direction and those wound in reverse should be placed alternately in multiple layers onto the shaft ends.

When shape-memorizing material of a desired shape-memorizing recovery factor cannot be used due to atmospheric or other conditions in the transmission of working force, or when quite a large working force must be transmitted, the shaft connection ends should be machined to match the direction of the working force.

In order that the present invention may be better understood, several embodiments thereof will now be described by way of example only and with reference to the accompanying drawings in which:
Fig. 1 is a perspective view showing the composition of the invention using a diameter-reducing type shape-memorizing material before temperature change;
Fig. 2 is a perspective view showing the composition of the invention using a diameter-reducing type shape-memorizing material after temperature change;
Fig. 3 is a perspective view showing the composition of the invention using multi-layered (wound in the same direction) diameter-reducing type shape-memorizing materials after temperature change;
Fig. 4 is a perspective view showing the composition of the invention using multiple-layered (wound in different directions) diameter-reducing type shape-memorizing materials after temperature change;
Fig. 5 is a sectional view showing the composition of the invention using a diameter-ingreasing type shape-memorizing material after temperature change;
Fig. 6 is a sectional view showing the composition of the invention using diameter-reducing type and diameter-ingreasing type shape-memorizing materials after temperature change.

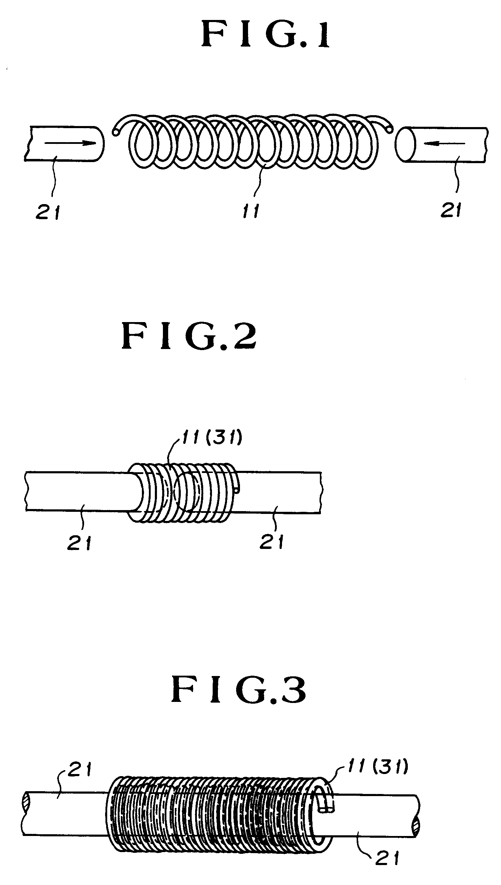

Explanation of an example of concrete embodiment of the present invention, as disclosed above, based on the attached drawings is as follows:
A helical shape-memorizing metal or resin 11 which has shape-memorizing characteristics and whose diameter reduces according to temperature change is placed onto the ends of shafts 21 to be connected, as shown in Fig. 1.

When temperature is changed, the diameter of the helical shape-memorizing material 11 reduces and it tightens onto the ends of shafts 21 to become connector 31, as shown in Fig. 2.

When a large working force is to be transmitted between shafts, the length (number of turns) of the helical shape-memorizing material is increased, and the desired working force can be obtained (not shown in figures). Another connection mechanism allowing transmission of a large working force is explained next. When a helical shape-memorizing metal or resin 11 which has shape-memorizing characteristics and whose diameter reduces according to temperature change is placed in multiple layers onto the ends of shafts 21 to be connected and the temperature is changed, the diameters of the shape-memorizing materials 11, are reduced and the shape-memorizing materials tighten onto the ends of shafts 21 to become connector 31, as shown in Fig. 3, allowing the desired working force to be obtained.

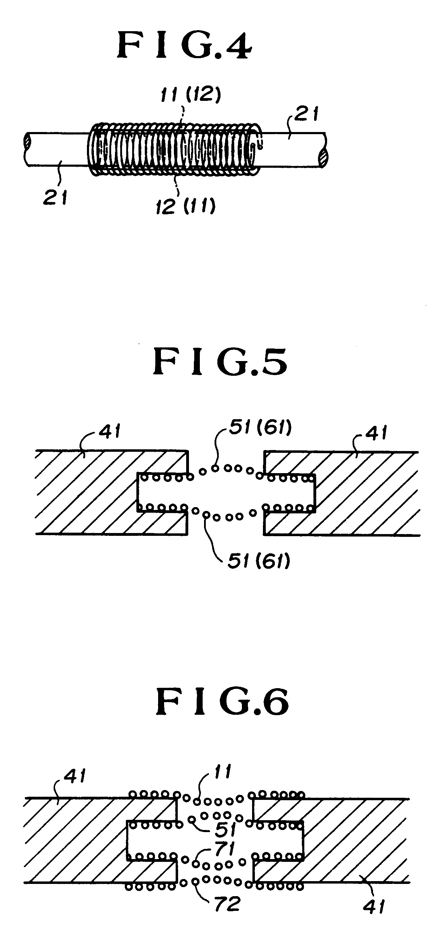

When a turning force is required to be transmitted in both forward and reverse directions similarly to a forward/reverse rotation-type motor shaft, diameter-reducing type helical shape-memorizing materials which are wound in forward and reverse directions are placed alternately in multiple layers as shown in Fig. 4, allowing the turning force to be effectively transmitted.

When hollow shafts (including those partially hollowed at connection sections) such as pipes are connected, helical shape-memorizing metal or resin 51 which has shape-memorizing characteristics and whose diameter increases according to temperature change is inserted into the ends of hollow shafts 41 to be connected, instead of the above-mentioned diameter-reducing type helical shape-memorizing material 11 (12). When temperature is changed, the diameter of the shape-memorizing material 51 is increased, and the shape-memorizing material is tightened onto the ends of the hollow shafts to become connector 61, as shown in Fig. 5.

When a large working force is required to be transmitted between shafts, namely, when hollow shafts 41, which require clamp torque to be increased or which are required to transmit both forward and reverse turning forces are connected, diameter-increasing type shape-memorizing material 51 (or 52 wound in reverse to 51) and diameter-reducing type shape-memorizing material 11 (or 12) are placed both inside and outside these shafts respectively as shown in Fig. 6, and temperature is changed, the diameters of shape-memorizing materials 51 (or 52) and 11 (or 12) are increased or reduced respectively, and both shape-memorizing materials tighten onto the ends of shafts 41 at both inner and outer surfaces, to become connectors 71 and 72 so that the desired torque can be obtained.

As explained above, this invention provides a shaft connection mechanism, which:
a) allows easy, compact connection;
b) can provide flexibility and function as a universal joint, namely, which allows connections to be freely designed to meet specific requirements because of its compact mechanism and its universal joint function;
c) does not require high centering accuracy between shafts;
d) essentially does not require screw stoppers or additional machining for connection purposes and can be easily mass-produced;
e) can freely provide connecting force, allow smooth connection and facilitate power transmission;
f) is available at low cost, is capable of mass-connection and accurate unmanned shaft connection;
g) accepts any shaft sectional shape and can be employed to connect even square-shaped shafts; and
h) can be used to finely control transmitted force by its flexibility and so can be employed to accurately connect shafts, especially eccentric shafts used for small precision instruments, medical robots and office equipment.

## Claims

1. A flexible connection for interconnecting shafts, the connection comprising a helical shape-memorizing material member which fits onto the ends of shafts to be connected.

2. A connection according to claim 1, wherein the diameter of the helical member reduces according to temperature change.

3. A connection according to claim 1, wherein the diameter of the helical member increases according to temperature change.

4. A connection according to claim 1, 2, or 3 comprising more than one such helical member.

5. A connection according to claim 4, wherein the helical members are all wound in the same direction.

6. A connection according to claim 4, wherein the helical members are wound in different directions.

7. A connection according to claim 4, 5, or 6, comprising at least one helical member whose diameter reduces according to temperature change and at least one helical member whose diameter increases according to temperature change, the helical members being arranged in multiple layers.

8. An arrangement comprising two shafts connected by a flexible connection according to any preceding claim.

## Patentansprüche

1. Flexibles Kupplungsstück zum Verbinden von Wellen, welches ein Schraubenelement aus Formgedächtnismaterial aufweist, das auf die Enden der zu verbindenden Wellen paßt.

2. Kupplungsstück nach Anspruch 1, bei welchem sich der Durchmesser des Schraubenelements entsprechend einer Temperaturänderung verringert.

3. Kupplungsstück nach Anspruch 1, bei welchem sich der Durchmesser des Schraubenelements entsprechend einer Temperaturänderung vergrößert.

4. Kupplungsstück nach Anspruch 1, 2 oder 3, welches mehr als ein solches Schraubenelement aufweist.

5. Kupplungsstück nach Anspruch 4, bei welchem die Schraubenelemente alle in der gleichen Richtung gewendelt sind.

6. Kupplungsstück nach Anspruch 4, bei welchem die Schraubenelemente in unterschiedlichen Richtungen gewendelt sind.

7. Kupplungsstück nach Anspruch 4, 5 oder 6, welches wenigstens ein Schraubenelement, dessen Durchmesser sich entsprechend einer Temperaturänderung verringert, und wenigstens ein Schraubenelement aufweist, dessen Durchmesser sich entsprechend einer Temperaturänderung vergrößert, wobei die Schraubenelemente in einer vielzahl von Schichten angeordnet sind.

8. Anordnung mit zwei Wellen, die durch ein flexibles Kupplungsstück nach einem vorhergehenden Anspruch verbunden sind.

## Revendications

1. Liaison flexible pour relier des arbres l'un à l'autre, la liaison comprenant un élément hélicoïdal en un matériau à mémoire de forme, qui s'ajuste sur les extrémités d'arbres devant être reliés.

2. Liaison selon la revendication 1, dans laquelle le diamètre de l'élément hélicoïdal diminue en fonction d'une variation de température.

3. Liaison selon la revendication 1, dans laquelle le diamètre de l'élément hélicoïdal augmente en fonction d'une variation de température.

4. Liaison selon la revendication 1, 2 ou 3 comprenant plus d'un tel élément hélicoïdal.

5. Liaison selon la revendication 4, dans laquelle les éléments hélicoïdaux sont tous enroulés dans le même sens.

6. Liaison selon la revendication 4, dans laquelle les éléments hélicoïdaux sont enroulés dans des sens différents.

7. Liaison selon la revendication 4, 5 ou 6, comprenant au moins un élément hélicoïdal dont le diamètre diminue en fonction d'une variation de température et au moins un élément hélicoïdal dont le diamètre augmente en fonction d'une variation de température, les éléments hélicoïdaux étant disposés en couches multiples.

8. Ensemble comprenant deux arbres reliés par une liaison flexible selon l'une quelconque des revendications précédentes.
